(19) Europäisches Patentamt
European Patent Office
Office européen des brevets

(11) EP 2 947 711 A1

(12) **EUROPEAN PATENT APPLICATION**
published in accordance with Art. 153(4) EPC

(43) Date of publication:
25.11.2015 Bulletin 2015/48

(21) Application number: 14741089.8

(22) Date of filing: 10.01.2014

(51) Int Cl.:
$H01M\ 4/13$ (2010.01)   $H01G\ 11/22$ (2013.01)
$H01G\ 11/66$ (2013.01)   $H01M\ 4/66$ (2006.01)

(86) International application number:
PCT/JP2014/050334

(87) International publication number:
WO 2014/112439 (24.07.2014 Gazette 2014/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.01.2013 JP 2013006211

(71) Applicant: Zeon Corporation
Tokyo 100-8246 (JP)

(72) Inventor: YOSHIDA Naoki
Tokyo 100-8246 (JP)

(74) Representative: Vossius & Partner
Patentanwälte Rechtsanwälte mbB
Siebertstrasse 3
81675 München (DE)

(54) **METHOD FOR MANUFACTURING CONDUCTIVE ADHESIVE COMPOSITION FOR ELECTROCHEMICAL ELEMENT ELECTRODE**

(57) Provided is a method for manufacturing an electroconductive adhesive composition for an electrochemical device electrode, the method including: a first step of stirring a slurry containing an electroconductive carbon, a particulate binder and a dispersion medium at a temperature range of 5 to 40°C; and a second step of treating the slurry stirred in the first step by using a high pressure disperser (2) with a treatment pressure of 80 to 230 MPa and a nozzle diameter of 100 to 500 μm.

FIG. 1

**Description**

{Technical Field}

The present invention relates to an electroconductive adhesive composition for an electrochemical device electrode for forming an electroconductive adhesive layer that is provided between an electrode active material layer and a current collector.

{Background Art}

An electrochemical device, in particular a lithium ion battery, which is compact and lightweight, has high energy density, and is further capable of repeatedly charging and discharging, has rapidly expanded the demand by utilizing the characteristics. Furthermore, the electrochemical device represented by a lithium ion battery has been expected to be used for from small size applications such as mobile phones or laptop personal computers to large size applications such as for in-vehicle, as it has large energy density and output density. Therefore, for these electrochemical devices, with the increase or development in the applications, further improvements such as resistance reduction, capacity enhancement, improvement of voltage resistance characteristics and improvement of mechanical characteristics, and cycle lifetime improvement have been required.

The electrochemical device can increase the operating voltage by using an organic-based electrolytic solution, and thus can increase the energy density, however on the other hand, since the viscosity of the electrolytic solution is high, there is a problem that the internal resistance is large.

Thus, an attempt has been made to reduce the internal resistance by providing an electroconductive adhesive layer between an electrode active material layer and a current collector (see, for example, Patent Literatures 1 and 2). In Patent Literatures 1 and 2, an electroconductive carbon in a mixed liquid containing water, an organic solvent and an electroconductive carbon is dispersed by a dissolver-type stirrer to provide an electroconductive adhesive composition, and the electroconductive adhesive composition is applied on a current collector and dried to form an electroconductive adhesive layer.

{Citation List}

{Patent Literature}

Patent Literature 1: JP 2012-72396 A
Patent Literature 2: JP 2012-74369 A

{Summary of Invention}

{Technical Problem}

However, in Patent Literatures 1 and 2, a medium is used for dispersing an electroconductive carbon, and therefore impurities such as metal atoms derived from the medium may be mixed in the electroconductive adhesive composition to be obtained. Accordingly, a polymer (latex) in the electroconductive adhesive composition is crosslinked, or an electroconductive carbon is broken by impact from the medium, and thus new interfaces are generated to cause reaggregation, so that storage stability may be deteriorated, for example, viscosity of the electroconductive adhesive composition increases. Further, since metal atoms are mixed in the electroconductive adhesive composition, high temperature cycle characteristics of the battery to be obtained have been deteriorated.

An object of the present invention is to provide a method for manufacturing an electroconductive adhesive composition for an electrochemical device electrode, which is excellent in storage stability and cycle characteristics of a battery.

{Solution to Problem}

As a result of extensive studies, the present inventor found that the above-described object can be achieved by dispersing an electroconductive carbon under specific conditions, leading to completion of the present invention.

That is, the present invention provides

(1) a method for manufacturing an electroconductive adhesive composition for an electrochemical device electrode, the method including: a first step of stirring a slurry containing an electroconductive carbon, a particulate binder and a dispersion medium at a temperature range of 5 to 40°C; and a second step of treating the slurry stirred in the first step by using a high pressure disperser with a treatment pressure of 80 to 230 MPa and a nozzle diameter of 100 to 500 $\mu$m;

(2) the method for manufacturing an electroconductive adhesive composition for an electrochemical device electrode according to (1), wherein a 150-mesh residue amount of the particulate binder used in the first step is 0.3% by weight or less in a Maron mechanical stability test;

(3) the method for manufacturing an electroconductive adhesive composition for an electrochemical device electrode according to (1) or (2), wherein a 90% cumulative value ($D_{90}$) in a volume particle size distribution of the electroconductive carbon used in the first step measured by a laser diffraction type particle size distribution measuring apparatus is 0.1 to 10 $\mu$m;

(4) the method for manufacturing an electroconductive adhesive composition for an electrochemical device electrode according to any of (1) to (3), wherein a total solid content concentration of the slurry containing an electroconductive carbon, a particulate binder and a dispersion medium and a total solid content concentration of the electroconductive adhesive composition for an electrochemical device electrode as obtained by the second step are 15 to 35% by weight; and

(5) the method for manufacturing an electroconductive adhesive composition for an electrochemical device electrode according to (1), wherein the nozzle diameter is 100 to 400 $\mu$m.

{Advantageous Effects of Invention}

According to the method for manufacturing an electroconductive adhesive composition for an electrochemical device electrode according to the present invention, an electroconductive adhesive composition for an electrochemical device electrode, which is excellent in storage stability and cycle characteristics of a battery, can be obtained.

{Brief Description of Drawings}

FIG. 1 is a schematic view illustrating a high pressure disperser according to an embodiment of the present invention.
FIG. 2 is a sectional view of a straight nozzle of the high pressure disperser according to the embodiment of the present invention.
FIG. 3 is a sectional view of a cross nozzle of the high pressure disperser according to the embodiment of the present invention.

{Description of Embodiments}

Hereinafter, a method for manufacturing an electroconductive adhesive composition for an electrochemical device electrode according to an embodiment of the present invention will be explained with reference to the drawings. The method for manufacturing an electroconductive adhesive composition for an electrochemical device electrode according to the present invention includes: a first step of stirring a slurry containing an electroconductive carbon, a particulate binder and a dispersion medium at a temperature range of 5 to 40°C; and a second step of treating the slurry stirred in the first step by using a high pressure disperser with a treatment pressure of 80 to 230 MPa and a nozzle diameter of 100 to 500 $\mu$m.

(High Pressure Disperser)

In the method for manufacturing an electroconductive adhesive composition for an electrochemical device electrode (hereinafter, it may be simply referred to as an "adhesive composition") according to the present invention, a high pressure disperser is used from the viewpoint that contamination of impurities from a medium such as beads can be suppressed, and the resulting battery has good cycle characteristics. While the high pressure disperser is not particularly limited as long as it is an apparatus that pressurizes a raw material composition to be jetted through a small opening of a nozzle or the like, a collision type wet jet mill (e.g., Star Burst manufactured by SUGINO MACHINE LIMITED), or a shearing type wet jet mill (e.g., Jet Mill (JN-100) manufactured by JOKOH; NanoVater (C-ES) manufactured by Yoshida Kikai Co., Ltd.; or BERYU MINI manufactured by BERYU Corporation) is preferably used.

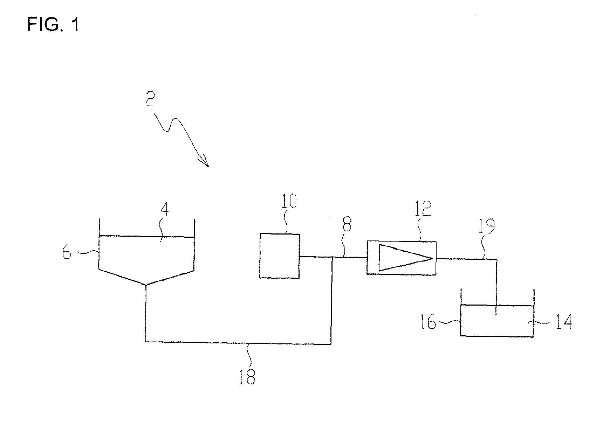

FIG. 1 is a view schematically illustrating a high pressure disperser to be used for manufacturing an adhesive composition of the present invention. A high pressure disperser 2 includes a raw material tank 6 that stores a raw material composition 4 in the form of a slurry containing an electroconductive carbon, a particulate binder and a dispersing agent, a slurry pump 10 that pressurizes the raw material composition 4 supplied to a conduit pipe 8, a nozzle 12 that subjects the pressurized raw material composition 4 to a dispersion treatment, and a product collection tank 16 that collects an adhesive composition 14 obtained by performing the dispersion treatment.

The raw material composition 4 is supplied to the conduit pipe 8 through a raw material supply pipe 18 connected to the raw material tank 6. The raw material composition 4 supplied to the conduit pipe 8 is pressurized by the slurry pump 10, and supplied to the nozzle 12 through the conduit pipe 8. Here, the total solid content concentration of the raw material composition 4 is preferably 15 to 35% by weight, more preferably 17 to 32% by weight, further preferably 20 to 30% by weight. When the total solid content concentration of the raw material composition 4 is excessively high, the viscosity of the raw material composition 4 increases, and therefore a high pressure dispersion treatment cannot be performed using the high pressure disperser 2. Also, when the total solid content concentration of the raw material composition 4 is excessively low, a uniform coating film cannot be obtained in application of the resulting adhesive composition 14 on a current collector.

Furthermore, the treatment pressure applied using the slurry pump 10 is 80 to 230 MPa, preferably 90 to 220 MPa, more preferably 100 to 210 MPa from the viewpoint that the electroconductive carbon can be dispersed without causing the particulate binder to be aggregated. When the treatment pressure is excessively low, the electroconductive carbon cannot be crushed. Also, when the treatment pressure is excessively high, the particulate binder is aggregated.

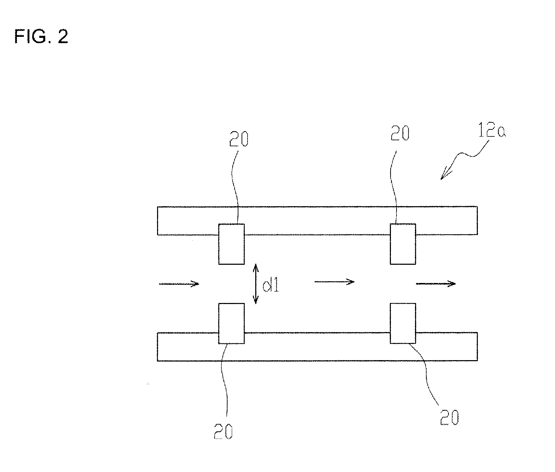

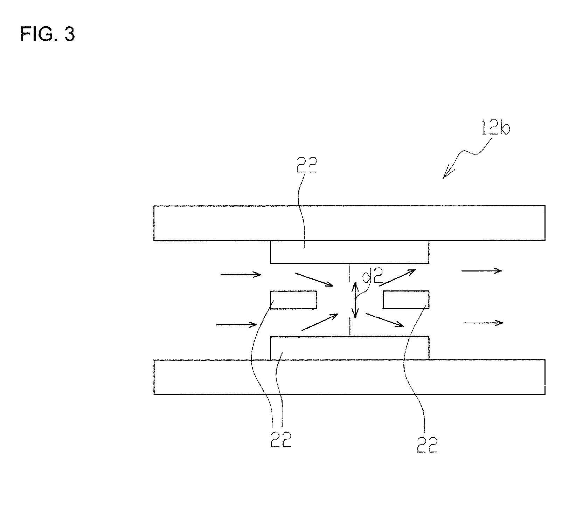

The electroconductive carbon in the raw material composition 4 is dispersed in the nozzle 12. Here, while the shape of the nozzle 12 is not particularly limited, a straight nozzle 12a shown in FIG. 2, a cross (X-type) nozzle 12b shown in FIG. 3, or the like can be used. Note that, the nozzle diameter is the inner diameter of the narrowest part of a channel for the raw material composition 4 in which the nozzle is provided. In the straight nozzle 12a (FIG. 2), $d_1$ is the nozzle diameter. In the cross nozzle 12b (FIG. 3), $d_2$ is the nozzle diameter. Furthermore, as a substance that constitutes members 20 and 22 that form rigid walls of nozzles 12a and 12b, diamond, a ceramic having a high hardness, or the like is preferably used.

The nozzle diameter of the nozzle 12 is 100 to 500 $\mu$m, preferably 100 to 400 $\mu$m, more preferably 110 to 380 $\mu$m, further preferably 120 to 350 $\mu$m from the viewpoint of pressurizing the raw material composition 4 at the above-described treatment pressure. When the nozzle diameter is excessively small, since an electroconductive carbon is bridged, clogging of the nozzle 12 occurs. Also, when the nozzle diameter is excessively large, the raw material composition 4 cannot be sufficiently pressurized in pressurization by the slurry pump 10. When the dispersion treatment is performed in the nozzle 12, the adhesive composition 14 is discharged to the product collection tank 16 through an outlet pipe 19.

Here, the raw material tank 6 is configured to be able to stir the raw material composition 4. Specifically, stirring using a stirring bar and a magnetic stirrer, stirring using a stirring rod or a stirring blade, or the like is exemplified. Also, the raw material tank 6 is configured to be able to keep a temperature of the raw material composition 4 as a desired temperature. The raw material composition 4 is kept at a temperature of 5 to 40°C, preferably 8 to 35°C, more preferably 10 to 30°C from the viewpoint that the raw material composition 4 has proper fluidity, and aggregation by heat does not occur in the raw material composition 4. When the temperature of the raw material composition 4 is excessively low, the raw material composition 4 may be frozen. Also, when the temperature of the raw material composition 4 is excessively high, aggregation of the raw material composition 4 may occur in pressurization by the slurry pump 10.

The method for manufacturing the raw material composition 4 is not particularly limited, and any method may be employed as long as solid components such as the electroconductive carbon and the particulate binder can be dispersed in a dispersion medium. For example, a dispersion liquid of the particulate binder, the electroconductive carbon, and optional components to be added as necessary may be mixed in a batch, followed by adding a dispersion medium as necessary to adjust the solid content concentration of the dispersion liquid. Furthermore, the electroconductive carbon may be added with the electroconductive carbon dispersed in some dispersion medium. Also, other components may be added after the particulate binder and the electroconductive carbon are brought into contact with each other, from the viewpoint of obtaining a composition slurry having good dispersibility.

(Electroconductive Carbon)

While the form of the electroconductive carbon to be used in the method for manufacturing an electroconductive adhesive composition for an electrochemical device electrode according to the present invention is not particularly limited, the electroconductive carbon is generally in the form of carbon particles. The carbon particle is a particle composed only of carbon, or composed substantially only of carbon. Specific examples thereof include graphites having high electroconductivity due to existence of delocalized $\pi$-electrons (specifically, natural graphites, artificial graphites and the like), carbon blacks as spherical aggregates with several layers of graphite carbon fine crystals gathering to form a turbulent layer structure (specifically, acetylene black, Ketjen black, other furnace blacks, channel black, thermal lamp black and the like), carbon fibers and carbon whiskers. These electroconductive carbons may be used alone, or may be used in combination of two kinds thereof. Among these, graphites and carbon blacks are preferred, and combinations of graphites and carbon blacks are more preferred from the viewpoint that an electroconductive adhesive layer having good electroconductivity can be formed, and an adhesive composition capable of being applied at a high speed can be obtained.

The 90% cumulative value ($D_{90}$) in the volume particle size distribution of the electroconductive carbon contained in the raw material composition 4 is preferably 0.1 to 10 $\mu$m, more preferably 0.5 to 9 $\mu$m, further preferably 1 to 8 $\mu$m from the viewpoint of efficiently performing dispersion. Here, the $D_{90}$ of the volume particle size of the electroconductive carbon can be measured by a laser diffraction type particle size distribution measuring apparatus (e.g., SALD-3100 manufactured by Shimadzu Corporation). When the $D_{90}$ of the volume particle size distribution of the electroconductive carbon is excessively small, the raw material composition has a high viscosity, and therefore cannot be dispersed by the high pressure disperser 2, and when the $D_{90}$ of the volume particle size distribution of the electroconductive carbon is excessively large, the nozzle 12 is easily clogged.

(Particulate Binder)

The particulate binder to be used in the method for manufacturing an electroconductive adhesive composition for an electrochemical device electrode according to the present invention is not particularly limited as long as it is a compound capable of binding the electroconductive carbons to each other. The suitable particulate binder is a dispersion type binder with a property of dispersing into a dispersion medium. Examples of the dispersion type binder include polymer compounds such as fluorine-based polymers, diene-based polymers, acryl-based polymers, polyimides, polyamides and polyurethane-based polymers.

The fluorine-based polymer is a polymer including monomer units containing fluorine atoms, and examples thereof include fluororesins such as polytetrafluoroethylene (PTFE) and polyvinylidene fluoride. Furthermore, the diene-based polymer is a homopolymer of conjugated diene, or a copolymer obtained by polymerizing a monomer mixture containing conjugated diene, or a hydrogenated product thereof. Specific examples of the diene-based polymer include conjugated diene homopolymers such as polybutadiene and polyisoprene; aromatic vinyl/conjugated diene copolymers such as styrene/butadiene copolymers (SBR) which may be carboxy-modified; vinyl cyanide/conjugated diene copolymers such as acrylonitrile/butadiene copolymers (NBR); and hydrogenated SBR and hydrogenated NBR.

The acryl-based polymer is a homopolymer of an acrylic acid ester or a methacrylic acid ester, or a copolymer with a monomer that can be copolymerized therewith. Examples of the copolymerizable monomer include unsaturated carboxylic acids such as acrylic acid, methacrylic acid, itaconic acid and fumaric acid; carboxylic acid esters having two or more carbon-carbon double bonds, such as ethylene glycol dimethacrylate, diethylene glycol dimethacrylate and trimethylolpropane triacrylate; styrene-based monomers such as styrene, chlorostyrene, vinyltoluene, t-butylstyrene, vinylbenzoic acid, methyl vinylbenzoate, vinylnaphthalene, chloromethylstyrene, hydroxymethylstyrene, $\alpha$-methylstyrene and divinylbenzene; amide-based monomers such as acrylamide, N-methylolacrylamide and acrylamide-2-methylpropanesulfonic acid; $\alpha,\beta$-unsaturated nitrile compounds such as acrylonitrile and methacrylonitrile; olefins such as ethylene and propylene; diene-based monomers such as butadiene and isoprene; halogen atom-containing monomers such as vinyl chloride and vinylidene chloride; vinyl esters such as vinyl acetate, vinyl propionate, vinyl butyrate and vinyl benzoate; vinyl ethers such as methyl vinyl ether, ethyl vinyl ether and butyl vinyl ether; vinyl ketones such as methyl vinyl ketone, ethyl vinyl ketone, butyl vinyl ketone, hexyl vinyl ketone and isopropenyl vinyl ketone; heterocyclic ring-containing vinyl compounds such as N-vinylpyrrolidone, vinylpyridine and vinylimidazole; and hydroxyalkyl group-containing compounds such as $\beta$-hydroxyethyl acrylate and $\beta$-hydroxyethyl methacrylate.

Among these, acryl-based polymers, SBR, polybutadiene and PTFE are preferably used, and acryl-based polymers and SBR are more preferably used from the viewpoint that they have high adhesion to a current collector, and are excellent in high temperature cycle characteristics of the battery to be obtained.

Furthermore, the 150-mesh residue amount of the particulate binder contained in the raw material composition 4 in the Maron mechanical stability test is preferably 0.3% by weight or less, more preferably 0.2% by weight or less, further preferably 0.1% by weight or less from the viewpoint that the raw material composition 4 can be dispersed at a high pressure. When the 150-mesh residue amount of the particulate binder in the Maron mechanical stability test is excessively large, the particulate binder is aggregated under at a high pressure, so that the raw material composition 4 cannot be dispersed. Here, the 150-mesh residue amount is a ratio (%) of the coarse aggregate amount (residue) to the amount of solid components in the sample, and coarse aggregates are obtained in the following manner: aggregates generated in the Maron mechanical stability test are caught over a 150-mesh wire net, and dried.

(Manufacture of Particulate Binder)

While the method for preparing the particulate binder is not particularly limited, the particulate binder can be obtained by emulsion-polymerizing a monomer mixture containing a monomer that constitutes a polymer. The method for emulsion polymerization is not particularly limited, and a previously known emulsion polymerization method may be employed.

(Dispersion Medium and Other Components)

The adhesive composition 14 obtained by the present invention is a composition in the form of a slurry, in which the above-described electroconductive carbon and particulate binder are dispersed in a dispersion medium. Here, as the dispersion medium, water and various kinds of organic solvents may be used without any particular limitation, as long as each of the above-described components can be uniformly dispersed, and a dispersed state can be stably maintained. For example, it is preferred to manufacture the adhesive composition directly without performing any operations such as solvent displacement after the above-described emulsion polymerization in the production of the particulate binder, from the viewpoint of simplification of production process, and it is desirable to use a reaction solvent that is used as a dispersion medium at the time of the emulsion polymerization. Water is frequently used as the reaction solvent in the emulsion polymerization, and further from the viewpoint of the working environment, it is particularly preferable to use water as the dispersion medium.

Further, the adhesive composition 14 obtained by the present invention may contain a dispersing agent for dispersing each of the above-described components.

Specific examples of the dispersing agent include cellulose-based polymers such as carboxymethyl cellulose, methyl cellulose, ethyl cellulose and hydroxypropyl cellulose, and ammonium salts or alkali metal salts thereof, poly(meth)acrylic acid salts such as sodium poly(meth)acrylate, polyvinyl alcohol, modified polyvinyl alcohol, polyethylene oxide, polyvinyl pyrrolidone, polycarboxylic acid, oxidized starch, phosphoric acid starch, casein and various kinds of modified starches. These dispersing agents may be used alone, or used in combination of two or more kinds thereof, respectively.

(Adhesive Composition)

While the content ratio of each component in the adhesive composition 14 obtained by the present invention is not particularly limited, the total solid content concentration of the adhesive composition is preferably 15 to 35% by weight, more preferably 17 to 32% by weight, further preferably 20 to 30% by weight. When the total solid content concentration of the adhesive composition 14 is excessively high, the viscosity of the adhesive composition increases, so that a high pressure dispersion treatment cannot be performed, and when the total solid content concentration of the adhesive composition 14 is excessively low, a uniform coating film cannot be obtained in application of the adhesive composition 14 on a current collector. Note that, the total solid content concentration of the adhesive composition 14 is substantially identical to the total solid content concentration of the raw material composition 4.

The adhesive composition 14 is in the form of a slurry, and the viscosity thereof is, depending on an application method, normally 10 to 10,000 mPa·s, preferably 20 to 5,000 mPa·s, particularly preferably 50 to 2,000 mPa·s. When the viscosity of the adhesive composition slurry is in the range, a uniform electroconductive adhesive layer can be formed on a current collector.

(Current Collector with Adhesive Layer)

When the adhesive composition 14 is applied on a current collector for an electrochemical device, and dried, a current collector with an adhesive layer can be obtained.

The material of the current collector is, for example, a metal, carbon, an electroconductive polymer or the like, and a metal is preferably used. As the metal for a current collector, aluminum, platinum, nickel, tantalum, titanium, stainless steel, copper, other alloys and the like are normally used. Among these, copper, aluminum or an aluminum alloy is preferably used from the viewpoint of electroconductivity and voltage resistance. The thickness of the current collector is 5 to 100 μm, preferably 8 to 70 μm, particularly preferably 10 to 50 μm.

The method for forming an electroconductive adhesive layer is not particularly limited. For example, the electroconductive adhesive layer is formed on the current collector by a doctor blade method, a dipping method, a reverse rolling method, a direct rolling method, a gravure method, an extrusion method, a die coating method, a brush coating or the like. Also, the electroconductive adhesive layer is formed on a release paper, and then the formed layer may be transferred to the current collector.

Examples of the drying method of an electroconductive adhesive layer include drying with warm air, hot air and low-humidity air, vacuum drying, and drying methods by irradiation with (far) infrared rays, electron beams and the like. Among these, drying methods with hot air, and drying methods by irradiation of far infrared rays are preferred. The drying temperature and drying time is preferably a temperature and time that makes it possible to completely remove a solvent in the slurry applied onto the current collector, and the drying temperature is normally 50 to 300°C, preferably 80 to 250°C. The drying time is normally 2 hours or less, preferably 5 seconds to 30 minutes.

The thickness of the electroconductive adhesive layer is 0.5 to 5 $\mu$m, preferably 0.5 to 4 $\mu$m, particularly preferably 0.5 to 3 $\mu$m from the viewpoint that the electroconductive adhesive layer has good adhesion with an electrode active material layer as described later, and an electrode having a low resistance is obtained.

The electroconductive adhesive layer has a composition corresponding to the solid content composition of the electroconductive adhesive composition for an electrochemical device electrode, and contains an electroconductive carbon, a water-soluble polymer and a particulate binder.

(Electrode for Electrochemical Device)

The electrode for an electrochemical device has an electrode active material layer on the electroconductive adhesive layer of the current collector with an adhesive layer. The electrode active material layer includes an electrode active material, an electroconductive material for an electrode and a binder for an electrode, and it is prepared from a slurry containing these components.

(Electrode Active Material)

The electrode active material may be a negative electrode active material, or may be a positive electrode active material. The electrode active material is a material that transfers electrons in a battery.

The positive electrode active material is a compound capable of occluding and releasing lithium ions. Positive electrode active materials are roughly classified into those composed of an inorganic compound and those composed of an organic compound.

Examples of the positive electrode active material composed of an inorganic compound include transition metal oxides, composite oxides of lithium and a transition metal, and transition metal sulfides. As the transition metal, Fe, Co, Ni, Mn and the like are used. Specific examples of the inorganic compound to be used in the positive active material include lithium-containing composite metal oxides such as $LiCoO_2$, $LiNiO_2$, $LiMnO_2$, $LiMn_2O_4$, $LiFePO_4$ and $LiFeVO_4$; transition metal sulfides such as $TiS_2$, $TiS_3$ and amorphous $MoS_2$; and transition metal oxides such as $Cu_2V_2O_3$, amorphous $V_2O$-$P_2O_5$, $MoO_3$, $V_2O_5$ and $V_6O_{13}$. These compounds may be partially substituted with another element.

Examples of the positive electrode active material composed of an organic compound include polyaniline, polypyrrole, polyacene, disulfide-based compounds, polysulfide-based compounds and N-fluoropyridinium salts. Note that, the positive electrode active material may be a mixture of the inorganic compound and the organic compound.

Examples of the negative electrode active material include allotropes of carbon such as graphite and coke. The negative electrode active material composed of the allotrope of carbon can also be used in the form of a mixture with a metal, a metal salt or an oxide and the like, or in the form of a coating body. Further, as the negative electrode active material, an oxide or a sulfate of silicon, tin, zinc, manganese, iron, nickel or the like, metal lithium, a lithium alloy such as Li-Al, Li-Bi-Cd or Li-Sn-Cd, a lithium transition metal nitride, silicone or the like may be used.

The volume average particle size of the electrode active material is normally 0.01 to 100 $\mu$m, preferably 0.05 to 50 $\mu$m, more preferably 0.1 to 20 $\mu$m for both the positive electrode active material and the negative electrode active material. These electrode active materials may be used alone, or used in combination of two or more kinds thereof, respectively.

(Electroconductive Material for Electrode)

The electroconductive material for an electrode has electroconductivity, and is composed of an allotrope of carbon in the form of particles, which does not have any fine pores that may form an electric double layer. Specific examples of the electroconductive material for an electrode include electroconductive carbon blacks such as furnace black, acetylene black and Ketjen black (registered trademark of Akzo Nobel Chemicals International B.V.). Among these, acetylene black and furnace black are preferred.

(Binder for Electrode)

The binder for an electrode is not particularly limited as long as it is a compound that can bind the electrode active material and the electroconductive material to each other.

The amount of the binder for an electrode is normally 0.1 to 50 parts by weight, preferably 0.5 to 20 parts by weight, more preferably 1 to 10 parts by weight based on 100 parts by weight of the electrode active material, from the viewpoint that adhesion between the electrode active material layer and the electroconductive adhesive layer to be obtained can be sufficiently secured, and the capacity of a lithium ion battery can be made higher and the internal resistance of the lithium ion battery can be made lower.

(Electrode Active Material Layer)

The electrode active material layer is provided on the electroconductive adhesive layer, but the forming method is not limited. The composition for forming an electrode contains an electrode active material, an electroconductive material and a binder as essential components, and may contain other dispersing agents and additives as necessary. Specific examples of other dispersing agents include polyvinylidene fluoride, polytetrafluoroethylene, cellulose-based polymers such as carboxymethyl cellulose, methyl cellulose, ethyl cellulose and hydroxypropyl cellulose, and ammonium salts or alkali metal salts thereof, poly(meth)acrylic acid salts such as sodium poly(meth)acrylate, polyvinyl alcohol, modified polyvinyl alcohol, polyethylene oxide, polyvinyl pyrrolidone, polycarboxylic acid, oxidized starch, phosphoric acid starch, casein and various kinds of modified starches. These dispersing agents may be used alone, or used in combination of two or more kinds thereof, respectively. While the amount of these dispersing agents is not particularly limited, it is normally 0.1 to 10 parts by weight, preferably 0.5 to 5 parts by weight, more preferably 0.8 to 2 parts by weight based on 100 parts by weight of the electrode active material.

In the case of forming the electrode active material layer, the slurry for an electrode in the form of a paste (slurry for a positive electrode or slurry for a negative electrode) can be manufactured by kneading an electrode active material, an electroconductive material and a binder as essential components, and also other dispersing agents and additives in water or an organic solvent such as N-methyl-2-pyrrolidone or tetrahydrofuran.

While the solvent to be used for obtaining the slurry is not particularly limited, a solvent capable of dissolving the dispersing agents is suitably used in the case where the above-described dispersing agents are used. Specifically, water is normally used, however an organic solvent can also be used, and a mixed solvent of water and organic solvent may be used. Examples of the organic solvent include alkyl alcohols such as methyl alcohol, ethyl alcohol and propyl alcohol; alkyl ketones such as acetone and methyl ethyl ketone; ethers such as tetrahydrofuran, dioxane and diglyme; amides such as diethyl formamide, dimethyl acetamide, N-methyl-2-pyrrolidone and dimethyl imidazolidinone; and sulfur-based solvents such as dimethyl sulfoxide and sulfolane. Among these, alcohols are preferred as the organic solvent. The slurry for an electrode active material layer is preferably an aqueous slurry in which water is used as the dispersion medium, from the viewpoint that the electrode active material layer is easily dried, and the load on the environment is small. When water and an organic solvent having a boiling point lower than that of water are used in combination, the drying speed can be made faster during the spray drying. Further, the dispersibility of the binder or the solubility of the dispersing agent changes depending on an amount or type of an organic solvent that is used in combination with water. Accordingly, the viscosity and fluidity of the slurry can be adjusted, as a result, production efficiency can be improved.

The amount of the solvent used in preparation of the slurry is such an amount that the solid content concentration of the slurry is normally 1 to 90% by weight, preferably 5 to 85% by weight, more preferably 10 to 80% by weight from the viewpoint of dispersing each component uniformly.

The method or procedure for dispersing or dissolving an electrode active material, an electroconductive material, a binder, and other dispersing agents or additives into a solvent is not particularly limited, and examples thereof include a method of adding and mixing an electrode active material, an electroconductive material, a binder and other dispersing agents or additives into a solvent; a method of dissolving a dispersing agent into a solvent, then adding and mixing a binder which has been dispersed in a solvent, and finally adding and mixing an electrode active material and an electroconductive material; and a method of adding and mixing an electrode active material and an electroconductive material into a binder, which has been dispersed in a solvent, then adding and mixing a dispersing agent dissolved in a solvent into the resultant mixture. Examples of mixing means include mixing devices such as ball mills, sand mills, bead mills, pigment dispersers, grinding machine, ultrasonic dispersers, homogenizers, homomixers and planetary mixers. Mixing is normally performed at a range of room temperature to 80°C for 10 minutes to several hours.

The viscosity of the slurry at room temperature is normally 10 to 100,000 mPa·s, preferably 30 to 50,000 mPa·s, more preferably 50 to 20,000 mPa·s from the viewpoint that productivity can be improved.

The applying method for the slurry on the electroconductive adhesive layer is not particularly limited. Examples thereof include a doctor blade method, a dipping method, a reverse rolling method, a direct rolling method, a gravure method, an extrusion method and a brush coating method. The application thickness of the slurry is appropriately determined according to an intended thickness of the electrode active material layer.

Examples of the drying method include drying methods with warm air, hot air or low-humidity air, vacuum drying, and drying methods by irradiation with (far) infrared rays, electron beams and the like. Among these, drying methods by irradiation of far infrared rays are preferred. The drying temperature and drying time is preferably a temperature and time that makes it possible to completely remove a solvent in the slurry applied on the current collector, and then the drying temperature is 100 to 300°C, preferably 120 to 250°C. The drying time is normally 5 minutes to 100 hours, preferably 10 minutes to 20 hours.

While the density of the electrode active material layer is not particularly limited, it is normally 0.30 to 10 g/cm$^3$, preferably 0.35 to 8.0 g/cm$^3$, more preferably 0.40 to 6.0 g/cm$^3$. Further, while the thickness of the electrode active material layer is not particularly limited, it is normally 5 to 1000 $\mu$m, preferably 20 to 500 $\mu$m, more preferably 30 to 300 $\mu$m.

(Electrochemical Device)

Examples of the use embodiment of the electrode for an electrochemical device include lithium ion secondary batteries, electric double layer capacitors, lithium ion capacitors, sodium batteries and magnesium batteries, in which the electrode has been used, and lithium ion secondary batteries are suitable. For example, the lithium ion secondary battery consists of the avobe-described electrode for an electrochemical device, a separator and an electrolytic solution.

(Separator)

The separator is not particularly limited as long as being capable of insulating between the electrodes for an electrochemical device, and of passing positive ions and negarive ions therethrough. Specifically, the separator is (a) a porous separator having pore portions; (b) a porous separator with a polymer coating layer formed on one surface or both surfaces thereof; or (c) a porous separator having a porous resin coating layer formed thereon that contains an inorganic ceramic powder. Examples thereof include a polypropylene-based, a polyethylene-based, a polyolefin-based, or an alamid-based porous separator, a polymer film for solid polymer electrolyte or for gel polymer electrolyte such as polyvinylidene fluoride, polyethylene oxide, polyacrylonitrile, or a polyvinylidene fluoridehexafluoropropylene copolymer; a separator coated with a gelated polymer coat layer; a separator coated with a porous membrane layer composed of an inorganic filler and a dispersing agent for the inorganic filler; or the like. The separator is arranged between the electrodes for an electrochemical device such that each of a pair of the electrode active material layers is opposed to each other, and thus an electrochemical device is obtained. While the thickness of the separator is appropriately selected according to a use purpose, it is normally 1 to 100 $\mu$m, preferably 10 to 80 $\mu$m, more preferably 15 to 60 $\mu$m.

(Electrolytic Solution)

While the electrolytic solution is not particularly limited, for example, one obtained by dissolving a lithium salt as a supporting electrolyte in a nonaqueous solvent may be used. Examples of the lithium salt include lithium salts such as $LiPF_6$, $LiAsF_6$, $LiBF_9$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$ and $(C_2F_5SO_2)NLi$. Particularly, $LiPF_6$, $LiClO_4$ and $CF_3SO_3Li$ which are easily dissolved in a solvent and exhibit a high dissociation degree are suitably used. These may be used alone, or used in combination of two or more kinds thereof. The amount of the supporting electrolyte is normally 1% by weight or more, preferably 5% by weight or more, and normally 30% by weight or less, preferably 20% by weight or less, with respect to the amount of the electrolytic solution. When the amount of the supporting electrolyte is either excessively small or excessively large, the ion conductivity decreases, leading to deterioration of charging characteristics and discharging characteristics of the battery.

While the solvent used for the electrolytic solution is not particularly limited as long as being capable of dissolving the supporting electrolyte, normally, alkyl carbonates such as dimethyl carbonate (DMC), ethylene carbonate (EC), diethyl carbonate (DEC), propylene carbonate (PC), butylene carbonate (BC) and methylethyl carbonate (MEC); esters such as $\gamma$-butyrolactone and methyl formate; ethers such as 1,2-dimethoxyethane and tetrahydrofuran; and sulfur-containing compounds such as sulfolane and dimethyl sulfoxide are used. Particularly, dimethyl carbonate, ethylene carbonate, propylene carbonate, diethyl carbonate and methylethyl carbonate are preferred since a high ion conductivity is easily achieved, and a wide range of use temperatures can be employed. These solvents may be used alone, or used in combination of two or more kinds thereof. Further, it is possible to add an additive to the electrolytic solution for use. Furthermore, as the additive, a carbonate-based compound such as vinylene carbonate (VC) is preferable.

Examples of the electrolytic solution other than those described above can include gel polymer electrolytes obtained by impregnating a polymer electrolyte such as polyethylene oxide or polyacrylonitrile with an electrolytic solution; and inorganic solid electrolytes such as lithium sulfide, LiI, $Li_3N$, $Li_2S$-$P_2S_5$ glass ceramics.

A secondary battery is obtained as follows: a negative electrode and a positive electrode are overlaid with each other placing a separator therebetween, the resultant is placed in a battery case by being wound, folded, or the like depending on the shape of the battery, then a electrolytic solution is poured into the battery case, and the battery case is sealed. Further, as needed, an expanded metal, an overcurrent prevention device such as a fuse, and a PTC device, a lead plate, and the like are also placed into the battery case, as a result, the increase of the internal pressure in the battery, and excessive charge-discharge can be prevented. The shape of the battery may be any one of a laminate cell type, a coin type, a button type, a sheet type, a cylinder type, a square type, and a flat type or the like.

{Examples}

Hereinafter, the present invention will be explained by way of examples, but the present invention is not limited at all by these examples. Each property is evaluated by the following methods. Note that, "parts" and "%" in the present Examples mean "parts by weight" and "% by weight", respectively, unless otherwise indicated.

(Measurement of Particle size)

A particle size (volume-based distribution) was measured using a laser diffraction type particle size distribution measuring apparatus (SALD 3100 manufactured by Shimadzu Corporation). Specifically, a particle size distribution (volume-based distribution) immediately after manufacture of a slurry was measured, and $D_{90}$ was determined. Furthermore, the $D_{90}$ was evaluated according to the following criteria, and the results were shown in Table 1.

A: less than 5 $\mu$m
B: 5 $\mu$m or more and less than 7 $\mu$m
C: 7 $\mu$m or more and less than 9 $\mu$m
D: 9 $\mu$m or more and less than 11 $\mu$m
E: 11 $\mu$m or more

(Storage Stability of Slurry (1))

An adhesive composition in the form of a slurry was put in a thermostatic bath set at 25°C immediately after manufacture of the adhesive composition, then it was left to stand still for 1 hour, and the slurry temperature was confirmed to reach 25°C. After that, following the adhesive composition mildly stirred, a viscosity (1) was measured. The adhesive composition was stored in a closed container at 25°C for 14 days. Thereafter, the adhesive composition was mildly stirred, it was confirmed that precipitation did not occur, and a viscosity (2) was measured. A viscosity change rate of the adhesive composition was calculated in accordance with the following formula (1). A smaller viscosity change rate shows better storage stability of the slurry. Note that, as a viscometer, Brookfield Digital Viscometer LVDV-II Pro was used, and a measurement was made under conditions of 25°C and 60 rpm.

$$\texttt{Viscosity change rate (\%) = (viscosity (2)/viscosity}$$

$$\texttt{(1)) × 100 ... formula (1)}$$

Further, the calculated viscosity change rate was evaluated according to the following criteria, and the results were shown in Table 1.

A: The viscosity change rate is 90% or more and less than 101%.
B: The viscosity change rate is 101% or more and less than 110%.
C: The viscosity change rate is 110% or more and less than 120%.
D: The viscosity change rate is 120% or more and less than 130%.
E: The viscosity change rate is 130% or more.

(Storage Stability of Slurry (2))

A particle size distribution (volume-based distribution) immediately after manufacture of an adhesive composition in the form of a slurry was measured, and $D_{90}$ (1) was determined. The adhesive composition was stored in a closed container at 25°C for 14 days, the slurry was then mildly stirred, it was confirmed that precipitation did not occur, a particle size distribution was measured again, and $D_{90}$ (2) was determined. A change rate of $D_{90}$ was calculated in accordance with the following formula (2). A smaller particle size ($D_{90}$) change rate shows better storage stability of the slurry.

$$\texttt{Particle size } (D_{90}) \texttt{ change rate = } (D_{90}(2)/D_{90}(1)) \texttt{ ×}$$

$$\texttt{100 ... formula (2)}$$

Further, the calculated viscosity change rate was evaluated according to the following criteria, and the results were shown in Table 1.

A: The particle size ($D_{90}$) change rate is 100% or more and less than 120%.
B: The particle size ($D_{90}$) change rate is 120% or more and less than 140%.
C: The particle size ($D_{90}$) change rate is 140% or more and less than 160%.

D: The particle size ($D_{90}$) change rate is 160% or more.

(High Temperature Cycle Characteristics)

The lithium ion secondary battery of a laminate type cell, which had been produced in Examples and Comparative Examples, was left to stand still for 24 hours, then a charge-discharge operation was performed at a charge-discharge rate of 4.2V, 0.1C, and the initial capacity $C_0$ was measured. Further, the charge-discharge was repeated under the environment of 60°C, and the capacity $C_2$ after 100 cycles was measured. The high temperature cycle characteristics were evaluated according to the capacity change rate $\Delta C_C$ shown by $\Delta C_C = C_2/C_0 \times 100(\%)$.

As the evaluation criteria of cycle characteristics, the charge-discharge capacity retention rate was evaluated according to the following criteria. A higher value of the charge-discharge capacity retention rate indicates that the high temperature cycle characteristics are excellent.

A: The charge-discharge capacity retention rate is 80% or more.
B: The charge-discharge capacity retention rate is 75% or more and less than 80%.
C: The charge-discharge capacity retention rate is 70% or more and less than 75%.
D: The charge-discharge capacity retention rate is less than 70%.

(Low Temperature Output Characteristics)

A laminate type cell prepared in each of Examples and Comparative Examples was charged at 25°C at a constant current of 0.1 C to a charge depth (SOC) of 50%, and a voltage $V_0$ was measured. Thereafter, the cell was discharged at -10°C at a constant current of 1 C for 10 seconds, and a voltage $V_1$ was measured. A voltage drop: $\Delta V = V_0 - V_1$ was calculated based on the results of these measurements.

The calculated voltage drop $\Delta V$ was evaluated according to the following criteria, and the results were shown in Table 1. A smaller value of the voltage drop $\Delta V$ indicates that low temperature output characteristics are excellent.

A: The voltage drop $\Delta V$ is 100 mV or more and less than 120 mV.
B: The voltage drop $\Delta V$ is 120 mV or more and less than 140 mV.
C: The voltage drop $\Delta V$ is 140 mV or more and less than 160 mV.
D: The voltage drop $\Delta V$ is 160 mV or more and less than 180 mV.
E: The voltage drop $\Delta V$ is 180 mV or more and less than 200 mV.
F: The voltage drop $\Delta V$ is 200 mV or more.

(Maron Mechanical Stability Test)

A measurement was made in the following manner using a Maron mechanical stability tester (manufactured by Kumagai Riki Kogyo Co., Ltd.). 75 g of a particulate binder diluted to a solid content concentration of 30% was used as a sample, and a test was conducted with a load of 15 Kgf applied to the sample at 45°C for 10 minutes. After the test, generated aggregates were caught over a 150-mesh wire net, and dried, then an amount of coarse aggregates was determined. A ratio (%) of the amount of coarse aggregates (residues) to the amount of solids in the sample was calculated, and defined as an index for mechanical stability of the particulate binder. Further, the calculated ratio (%) of the amount of coarse aggregates was shown in Table 1. A smaller value of this value indicates that mechanical stability is excellent.

{Example 1}

(Manufacture of Adhesive Composition)

A raw material composition was prepared by adding a carbon material (carbon black + graphite) to an aqueous solution with ion-exchanged water and a dispersing agent (polyvinyl alcohol) dissolved therein, furthermore a 40% water dispersion of an acryl-based polymer was added which has a glass transition temperature of -15°C and a number average particle size of 0.31 $\mu$m as a particulate copolymer. The raw material composition was cooled to a temperature of 20°C, and subjected to a three-pass treatment at a pressure of 150 MPa using an X-type nozzle having a nozzle diameter of 150 $\mu$m in a jet mill (JN-100 manufactured by JOKOH), so that an adhesive composition was prepared. The obtained adhesive composition had a solid content concentration of 25% by weight.

(Forming of Electroconductive Adhesive Layer)

The electroconductive adhesive composition was applied on an aluminum current collector with a roll bar using a casting method. The electroconductive adhesive composition was applied on both front and back surfaces of the current collector at a forming speed of 20 m/minute, then the resultant was dried at 60°C for 1 minute, and was continuously dried at 120°C for 2 minutes, as a result, an electroconductive adhesive layer having a thickness of 1.2 μm was formed.

(Preparation of Electrode)

100 parts of lithium cobaltate having a volume average particle size of 8 μm as a positive electrode active material, 2.0 parts of a 1.5% aqueous solution of carboxymethyl cellulose ammonium (DN-800HI manufactured by DAICEL CHEMICAL INDUSTRIES, LTD.) in terms of a solid content as a dispersing agent, 5 parts of acetylene black (DENKA BLACK in powder form: manufactured by DENKI KAGAKU KOGYO KABUSHIKI KAISHA) as an electroconductive material, 3.0 parts of a 40% water dispersion of an acryl-based polymer having a glass transition temperature of -28°C and a number average particle size of 0.25 μm in terms of a solid content as a binder for an electrode composition, and ion-exchanged water were mixed by a planetary mixer such that the total solid content concentration became 35%, as a result, a composition for a positive electrode was prepared.

The composition for a positive electrode was applied on both of the front and back surfaces of the aluminum current collector on which the electroconductive adhesive layer has been formed as described above, at an electrode forming speed of 20 m/minute, and drying was performed at 120°C for 5 minutes. Then the resultant was punched into a 5 cm square, as a result, a positive electrode for a lithium ion battery, having an electrode composition layer having a thickness of 100 μm per one surface, was obtained.

On the other hand, 100 parts of graphite having a volume average particle size of 3.7 μm (KS-6: manufactured by TIMCAL Graphite & Carbon) as a negative electrode active material, 2.0 parts of a 1.5% aqueous solution of carboxymethyl cellulose ammonium (DN-800H: manufactured by DAICEL CHEMICAL INDUSTRIES, LTD.) in terms of a solid content as a dispersing agent, 5 parts of acetylene black (DENKA BLACK in powder form: manufactured by DENKI KAGAKU KOGYO KABUSHIKI KAISHA) as an electroconductive material, 3.0 parts of a 40% water dispersion of a diene-based polymer having a glass transition temperature of -48°C and a number average particle size of 0.18 μm in terms of a solid content as a binder for an electrode composition, and ion-exchanged water were mixed such that the total solid content concentration became 35%, as a result, a composition for a negative electrode was prepared.

The slurry composition for a negative electrode was applied on one surface of a copper foil having a thickness of 18 μm using a comma coater such that the film thickness after the drying became about 100 μm, and the resultant was dried at 60°C for 20 minutes, then heating treatment was performed at 150°C for 20 minutes, as a result, a negative electrode active material layer was formed. Subsequently, the resultant was rolled with a roll press, and punched into a 5.2 cm square, as a result, an electrode plate for a negative electrode having a thickness of 50 μm per one surface was obtained.

(Manufacture of Battery)

A lithium ion battery in a multilayer type laminate cell shape was prepared using the positive electrode, the negative electrode and the separator. As the electrolytic solution, the one in which $LiPF_6$ was dissolved in a mixed solvent of ethylene carbonate and diethyl carbonate with a weight ratio of 1 : 2 at a concentration of 1.0 mol/liter was used.

{Example 2}

An adhesive composition and a battery were manufactured in the same manner as in Example 1 except that the treatment pressure in the jet mill was 220 MPa.

{Example 3}

An adhesive composition and a battery were manufactured in the same manner as in Example 1 except that the treatment pressure in the jet mill was 85 MPa.

{Example 4}

An adhesive composition and a battery were manufactured in the same manner as in Example 1 except that the nozzle used in the jet mill was an X-type nozzle having a nozzle diameter of 370 μm.

{Example 5}

An adhesive composition and a battery were manufactured in the same manner as in Example 1 except that the nozzle used in the jet mill was an X-type nozzle having a nozzle diameter of 105 μm.

{Example 6}

An adhesive composition and a battery were manufactured in the same manner as in Example 1 except that NanoVater (C-ES manufactured by Yoshida Kikai Co., Ltd.) was used as a jet mill.

{Example 7}

An adhesive composition and a battery were manufactured in the same manner as in Example 1 except that the nozzle used in the jet mill was an X-type nozzle having a nozzle diameter of 450 μm.

{Comparative Example 1}

An adhesive composition and a battery were manufactured in the same manner as in Example 1 except that the apparatus used for dispersion was a mixer (magic LAB manufactured by IKA Company).

{Comparative Example 2}

An adhesive composition and a battery were manufactured in the same manner as in Example 1 except that the apparatus used for dispersion was a bead mill (LMZ 015 manufactured by Ashizawa Finetech Ltd.).

{Comparative Example 3}

An adhesive composition and a battery were manufactured in the same manner as in Example 1 except that the temperature of the raw material composition was 55°C.

{Comparative Example 4}

An adhesive composition and a battery were manufactured in the same manner as in Example 1 except that the nozzle used in the jet mill was an X-type nozzle having a nozzle diameter of 410 μm, and the treatment pressure in the jet mill was 50 MPa.

{Comparative Example 5}

An adhesive composition and a battery were manufactured in the same manner as in Example 1 except that the nozzle used in the jet mill was an X-type nozzle having a nozzle diameter of 90 μm, and the treatment pressure in the jet mill was 270 MPa.

(Table 1)

| | | | Ex. 1 | Ex. 2 | Ex. 3 | Ex. 4 | Ex. 5 |
|---|---|---|---|---|---|---|---|
| Treatment conditions | Apparatus | | Jet mill (JN-100) manufactured by JOKOH | Jet mill (JN-100) manufactured by JOKOH | Jet mill (JN-100) manufactured by JOKOH | Jet mill (JN-100) manufactured by JOKOH | Jet mill (JN-100) manufactured by JOKOH |
| | Raw material composition temperature (in raw material tank) | | 20°C | 20°C | 20°C | 20°C | 20°C |
| | Treatment pressure | | 150 MPa | 220 MPa | 85 MPa | 150 MPa | 150 MPa |
| | Nozzle diameter | | 150 μm | 150 μm | 150 μm | 370 μm | 105 μm |
| Raw material composition | Composition | Electroconductive carbon | Graphite/ carbon black | Graphite/ carbon black | Graphite/ carbon black | Graphite/ carbon black | Graphite/ carbon black |
| | | Particulate binder | Acryl-based polymer | Acryl-based polymer | Acryl-based polymer | Acryl-based polymer | Acryl-based polymer |
| | | Dispersion medium | Water | Water | Water | Water | Water |
| | Maron mechanical stability test of particulate binder | | 0.01% by weight | 0.01% by weight | 0.01% by weight | 0.01% by weight | 0.01% by weight |
| | Electroconductive carbon particle size ($D_{90}$) | | 7 μm | 7 μm | 7 μm | 7 μm | 7 μm |
| | Slurry solid content concentration | | 25% by weight | 25% by weight | 25% by weight | 25% by weight | 25% by weight |
| Evaluation items | Measurement of particle size | | A | A | B | B | A |
| | Storage stability of slurry (1) | | A | B | A | A | A |
| | Storage stability of slurry (2) | | A | A | A | A | B |
| | High temperature cycle characteristics | | A | A | B | A | A |
| | Low temperature output characteristics | | A | B | A | A | A |

EP 2 947 711 A1

{Table 1}

| | | | Ex. 6 | Ex. 7 | Comp. Ex. 1 | Comp. Ex. 2 |
|---|---|---|---|---|---|---|
| Treatment conditions | Apparatus | | NanoVater (C-ES) manufactured by Yoshida Kikai Co., Ltd. | Jet mill (JN-100) manufactured by JOKOH | Mixer (magic LAB) manufactured by IKA Company | Bead mill (LMZ 015) manufactured by Ashizawa Finetech Ltd. |
| | Raw material composition temperature (in raw material tank) | | 20°C | 20°C | 20°C | 20°C |
| | Treatment pressure | | 150 MPa | 150 MPa | – | – |
| | Nozzle diameter | | 150 μm | 450 μm | – | – |
| Raw material composition | Composition | Electroconductive carbon | Graphite/ carbon black | Graphite/ carbon black | Graphite/ carbon black | Graphite/ carbon black |
| | | Particulate binder | Acryl-based polymer | Acryl-based polymer | Acryl-based polymer | Acryl-based polymer |
| | | Dispersion medium | Water | Water | Water | Water |
| | Maron mechanical stability test of particulate binder | | 0.01% by weight | 0.01% by weight | 0.01% by weight | 0.01% by weight |
| | Electroconductive carbon particle size ($D_{90}$) | | 7 μm | 7 μm | 7 μm | 7 μm |
| | Slurry solid content concentration | | 25% by weight | 25% by weight | 25% by weight | 25% by weight |
| Evaluation items | Measurement of particle size | | A | B | B | A |
| | Storage stability of slurry (1) | | A | A | C | E |
| | Storage stability of slurry (2) | | A | B | C | D |
| | High temperature cycle characteristics | | A | A | B | C |
| | Low temperature output characteristics | | A | A | B | B |

EP 2 947 711 A1

{Table 1}

| | | Comp. Ex. 3 | Comp. Ex. 4 | Comp. Ex. 5 |
|---|---|---|---|---|
| Treatment conditions | Apparatus | Jet mill (JN-100) manufactured by JOKOH | Jet mill (JN-100) manufactured by JOKOH | Jet mill (JN-100) manufactured by JOKOH |
| | Raw material composition temperature (in raw material tank) | 55°C | 20°C | 20°C |
| | Treatment pressure | 150 MPa | 50 MPa | 270 MPa |
| | Nozzle diameter | 150 μm | 410 μm | 90 μm |
| Raw material composition | Composition — Electroconductive carbon | Graphite/carbon black | Graphite/carbon black | Graphite/carbon black |
| | Composition — Particulate binder | Acryl-based polymer | Acryl-based polymer | Acryl-based polymer |
| | Composition — Dispersion medium | Water | Water | Water |
| | Maron mechanical stability test of particulate binder | 0.01% by weight | 0.01% by weight | 0.01% by weight |
| | Electroconductive carbon particle size ($D_{90}$) | 7 μm | 7 μm | 7 μm |
| | Slurry solid content concentration | 25% by weight | 25% by weight | 25% by weight |
| | Measurement of particle size | E | D | E |
| Evaluation items | Storage stability of slurry (1) | Manufacturing impossible with slurry aggregated | C | Manufacturing impossible with slurry aggregated |
| | Storage stability of slurry (2) | - | D | - |
| | High temperature cycle characteristics | - | D | - |
| | Low temperature output characteristics | - | E | - |

As shown in Table 1, when a raw material composition containing an electroconductive carbon, a particulate binder and a dispersion medium was stirred at a temperature range of 5 to 40°C, and the raw material composition was treated with a treatment pressure of 80 to 230 MP and a nozzle diameter of 100 to 500 μm using a high pressure disperser, the resulting adhesive composition had good slurry stability and battery characteristics.

{Reference Signs List}

2 ... high pressure disperser, 4 ... raw material composition, 6 ... raw material tank, 10 ... slurry pump, 12 ... nozzle, 14 ... adhesive composition

**Claims**

1. A method for manufacturing an electroconductive adhesive composition for an electrochemical device electrode, the method comprising:

   a first step of stirring a slurry containing an electroconductive carbon, a particulate binder and a dispersion medium at a temperature range of 5 to 40°C; and
   a second step of treating the slurry stirred in the first step by using a high pressure disperser with a treatment pressure of 80 to 230 MPa and a nozzle diameter of 100 to 500 $\mu$m.

2. The method for manufacturing an electroconductive adhesive composition for an electrochemical device electrode according to claim 1,
   wherein a 150-mesh residue amount of the particulate binder used in the first step is 0.3% by weight or less in a Maron mechanical stability test.

3. The method for manufacturing an electroconductive adhesive composition for an electrochemical device electrode according to claim 1 or 2,
   wherein a 90% cumulative value ($D_{90}$) in a volume particle size distribution of the electroconductive carbon used in the first step measured by a laser diffraction type particle size distribution measuring apparatus is 0.1 to 10 $\mu$m.

4. The method for manufacturing an electroconductive adhesive composition for an electrochemical device electrode according to any one of claims 1 to 3,
   wherein a total solid content concentration of the slurry containing an electroconductive carbon, a particulate binder, and a dispersion medium and a total solid content concentration of the electroconductive adhesive composition for an electrochemical device electrode obtained by the second step are 15 to 35% by weight.

5. The method for manufacturing an electroconductive adhesive composition for an electrochemical device electrode according to claim 1,
   wherein the nozzle diameter is 100 to 400 $\mu$m.

FIG. 1

FIG. 2

FIG. 3

| **INTERNATIONAL SEARCH REPORT** | International application No. |
|---|---|
| | PCT/JP2014/050334 |

A. CLASSIFICATION OF SUBJECT MATTER
*H01M4/13*(2010.01)i, *H01G11/22*(2013.01)i, *H01G11/66*(2013.01)i, *H01M4/66* (2006.01)i

According to International Patent Classification (IPC) or to both national classification and IPC

B. FIELDS SEARCHED

Minimum documentation searched (classification system followed by classification symbols)
H01M4/13, H01G11/22, H01G11/66, H01M4/66

Documentation searched other than minimum documentation to the extent that such documents are included in the fields searched
Jitsuyo Shinan Koho 1922–1996 Jitsuyo Shinan Toroku Koho 1996–2014
Kokai Jitsuyo Shinan Koho 1971–2014 Toroku Jitsuyo Shinan Koho 1994–2014

Electronic data base consulted during the international search (name of data base and, where practicable, search terms used)
JSTPlus(JDreamIII), JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2004-281096 A (Hitachi Maxell, Ltd.), 07 October 2004 (07.10.2004), claim 1; examples (Family: none) | 1-5 |
| A | JP 2012-252824 A (Asahi Glass Co., Ltd.), 20 December 2012 (20.12.2012), paragraph [0074] (Family: none) | 1-5 |
| A | JP 2012-72396 A (Showa Denko Kabushiki Kaisha), 12 April 2012 (12.04.2012), claims 1 to 14 & US 2013/0196230 A1 & WO 2012/029328 A & KR 10-2013-0030779 A & CN 103097472 A | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 02 April, 2014 (02.04.14) | Date of mailing of the international search report 15 April, 2014 (15.04.14) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/050334

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2013-84587 A (Cemedine Co., Ltd.), 09 May 2013 (09.05.2013), claims 1, 14 (Family: none) | 1-5 |
| E,A | JP 2014-12902 A (Showa Denko Kabushiki Kaisha), 23 January 2014 (23.01.2014), claims 1 to 6 (Family: none) | 1-5 |
| E,A | WO 2014/042266 A1 (Mikuni Color Ltd.), 20 March 2014 (20.03.2014), claims 1 to 17 (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012072396 A

- JP 2012074369 A